(19) Europäisches Patentamt / European Patent Office / Office européen des brevets

(11) **EP 3 536 523 B1**

(12) **EUROPEAN PATENT SPECIFICATION**

(45) Date of publication and mention
of the grant of the patent:
**04.01.2023 Bulletin 2023/01**

(21) Application number: **19160662.3**

(22) Date of filing: **04.03.2019**

(51) International Patent Classification (IPC):
**B60C 19/08** *(2006.01)*     **B60C 11/00** *(2006.01)*
**B60C 11/24** *(2006.01)*     **B60C 11/03** *(2006.01)*

(52) Cooperative Patent Classification (CPC):
**B60C 11/005; B60C 11/0306; B60C 11/24;**
**B60C 19/082;** B60C 2011/0016; B60C 2011/0025

(54) **TIRE WITH EVOLVING TREAD**

REIFEN MIT SICH ENTWICKELNDER LAUFFLÄCHE

PNEU COMPORTANT UNE BANDE DE ROULEMENT ÉVOLUTIVE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.03.2018 US 201862639611 P**

(43) Date of publication of application:
**11.09.2019 Bulletin 2019/37**

(73) Proprietor: **Bridgestone Americas Tire
Operations, LLC
Nashville, TN 37201 (US)**

(72) Inventor: **STUCKEY, Jon I.
Uniontown, OH 44685 (US)**

(74) Representative: **Marks & Clerk LLP
15 Fetter Lane
London EC4A 1BW (GB)**

(56) References cited:
**EP-A1- 0 798 142     EP-A1- 1 512 554
EP-A1- 3 260 305     JP-A- 2002 052 906
US-A1- 2015 083 293**

Description

## FIELD OF INVENTION

This invention relates to the field of tires with circumferential treads. More specifically, this invention relates to the field of tires with circumferential treads constructed of multiple materials having different material properties.

## BACKGROUND

Tire treads are rubber compositions which contain at least some carbon black reinforcement. The rubber of a tread may be selected for its material properties, such as its hardness. As the tread wears, the tread rubber maintains the same material properties. Multi-layered tread structures have also been employed for durability purposes and to improve abrasion resistance or wet-road properties. Attention is drawn to the disclosures of JP2002-052906A, US2015/083293A1 and EP1512554A1.

## SUMMARY OF THE INVENTION

In a first aspect of the present invention, a tire is provided as claimed in claim 1.
In a second aspect of the present invention, a method of making a tire is provided as claimed in claim 8.
[DELETED]

## BRIEF DESCRIPTION OF THE DRAWINGS

In the accompanying drawings, structures are illustrated that, together with the detailed description provided below, describe exemplary embodiments of the claimed invention. Like elements are identified with the same reference numerals. It should be understood that elements shown as a single component may be replaced with multiple components, and elements shown as multiple components may be replaced with a single component. The drawings are not to scale and the proportion of certain elements may be exaggerated for the purpose of illustration.

Figure 1 is a perspective view of one embodiment of a tire 100 having a multi-layered tread;
Figure 2 is a partial cross-section of the tire 100;
Figure 3 is a partial cross-section of an alternative embodiment of a tire having a multi-layered tread;
Figure 4 is a partial cross-section of an alternative form of a tire having a multi-layered tread which is not according to the present invention but is useful for understanding the present invention; and
Figure 5 is a partial cross-section of another alternative embodiment of a tire having a multi-layered tread.

## DETAILED DESCRIPTION

The following includes definitions of selected terms employed herein. The definitions include various examples and/or forms of components that fall within the scope of a term and that may be used for implementation. The examples are not intended to be limiting. Both singular and plural forms of terms may be within the definitions.
"Axial" and "axially" refer to a direction that is parallel to the axis of rotation of a tire.
"Circumferential" and "circumferentially" refer to a direction extending along the perimeter of the surface of the tread perpendicular to the axial direction.
"Equatorial plane" refers to the plane that is perpendicular to the tire's axis of rotation and passes through the center of the tire's tread.
"Radial" and "radially" refer to a direction perpendicular to the axis of rotation of a tire.
"Tread" as used herein, refers to that portion of the tire that comes into contact with the road or ground under normal inflation and load.
Directions are stated herein with reference to the axis of rotation of the tire. The terms "upward" and "upwardly" refer to a general direction towards the tread of the tire, whereas "downward" and "downwardly" refer to the general direction towards the axis of rotation of the tire. Thus, when relative directional terms such as "upper" and "lower" or "top" and "bottom" are used in connection with an element, the "upper" or "top" element is spaced closer to the tread than the "lower" or "bottom" element. Additionally, when relative directional terms such as "above" or "below" are used in connection with an element, an element that is "above" another element is closer to the tread than the other element.
The terms "inward" and "inwardly" refer to a general direction towards the equatorial plane of the tire, whereas "outward" and "outwardly" refer to a general direction away from the equatorial plane of the tire and towards the sidewall of the tire. Thus, when relative directional terms such as "inner" and "outer" are used in connection with an element, the "inner" element is spaced closer to the equatorial plane of the tire than the "outer" element.
While similar terms used in the following descriptions describe common tire components, it is understood that because the terms carry slightly different connotations, one of ordinary skill in the art would not consider any one of the following terms to be purely interchangeable with another term used to describe a common tire component.

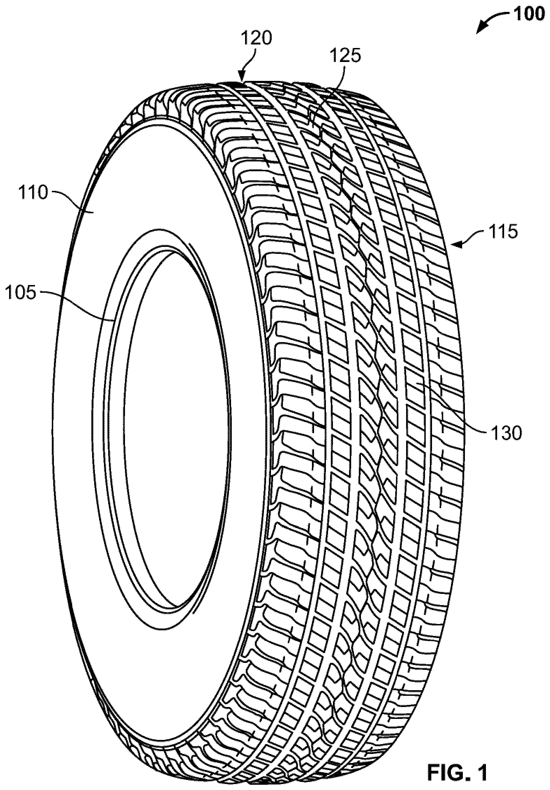

Figure 1 is a perspective view of one embodiment of a tire 100. The tire 100 is a pneumatic tire having a pair of bead portions 105 and a pair of sidewall portions 110 extending between the pair of bead portions 105 and a circumferential tread 115. Only one bead portion and one sidewall is visible from this view. In the illustrated embodiment, the circumferential tread 115 includes four circumferential grooves **120** that define five circumferential ribs **125**. Each rib **125** is further divided into a plurality of blocks **130** by a plurality of lateral grooves.

In alternative embodiments (not shown), the tread may have more than five ribs. One or more of the ribs may be circumferentially continuous (*i.e.,* lacking lateral grooves). The tread may include any number of sipes or other tread elements.

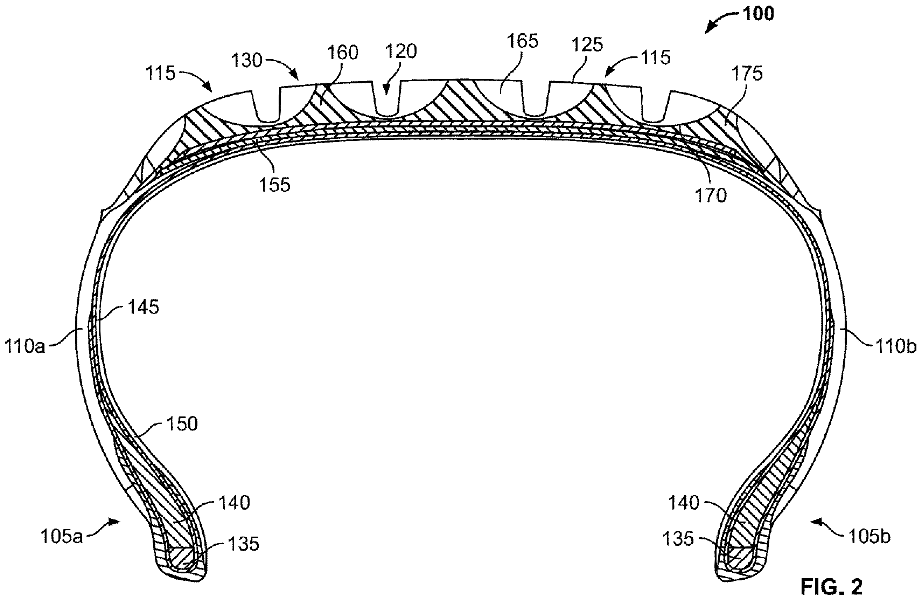

**Figure 2** is a partial cross-section of the tire **100**. From this view, it can be seen that the pair of bead portions **105** includes a first bead portion **105a** and a second bead portion **105b,** and the pair of sidewalls **110** includes a first sidewall **110a** and a second sidewall **110b.** Each bead portion includes a bead **135** and a bead filler **140**. In alternative embodiments (not shown), the bead filler may be composed of multiple components. In another alternative embodiment (not shown), the bead filler may be omitted.

A body ply **145** extends from bead to bead, wrapping around each bead **135** and having turn up portions that extend along the outside of each bead filler **140**. In an alternative embodiment (not shown), the turn up portion extends along the inside of the bead filler. In another alternative embodiment, the tire may include two or more body plies.

An inner liner **150** is disposed along the inside of the body ply **145**. In an alternative embodiment (not shown), the inner liner may be omitted.

A pair of belts **155** are disposed above the body ply **145**. The belts may be constructed of steel or a polymeric material. In an alternative embodiment (not shown), a single belt may be employed. In another alternative embodiment, three or more belts may be employed. Additionally, the tire **100** may include cap plies or other reinforcements. Such reinforcements may be located in a crown region, a sidewall, or a bead portion.

The circumferential tread **115** is a multi-layered tread that includes a base layer **160** and a cap layer **165** disposed above the base layer **160**. The base layer **160** is constructed of a first material and the cap layer **165** is constructed of a second material different from the first material. In one embodiment, the first material of the base layer **160** is a first rubber composition having a first complex dynamic modulus and a first glass transition temperature. The second material of the cap layer **165** is a second rubber composition having a second complex dynamic modulus greater than the first complex dynamic modulus, and a second glass transition temperature higher than the first glass transition temperature. Specifically, the first material has a lower glass transition temperature and a lower complex dynamic modulus than the second material when measured at -20° C, 6% static tensile strain and +/- 0.2% dynamic strain. In other words, the base layer **160** is constructed of a softer and more pliable material than the cap layer **165**.

Exemplary first rubber compositions for the base layer include, without limitation, natural rubber, synthetic rubber, carbon black, plasticizers, and oil. Alternatively, other materials may be employed. For example, any material having a dynamic complex modulus less than 200 mPa and a glass transition temperature less than -60° C may be used as a base layer.

Exemplary second rubber compositions for the cap layer include, without limitation, natural rubber, synthetic rubber, carbon black, silica, and silane. Alternatively, other materials may be employed. For example, any material having a dynamic complex modulus greater than 400 mPA and a glass transition temperature greater than -50° C may be used as a cap layer.

When a tread is constructed of a single material, the ribs and blocks are more flexible when the tire is new. As the tread wears and the groove depth decreases, the ribs and blocks become increasingly stiffer. By contrast, a multi-layered tread having a base layer constructed of a material with a lower dynamic complex modulus and a lower glass transition temperature will not become as stiff when the tire wears. The shape and the material composition of the base layer may be selected to "tune" the tire tread so that the tread maintains substantially the same stiffness as it wears. Alternatively, the tire tread may be "tuned" so that it become less stiff as it wears.

A material having a lower dynamic complex modulus and a lower glass transition temperature may exhibit better performance in cold temperatures and in snow, while a material having a higher dynamic complex modulus and a higher glass transition temperature may exhibit better performance in warm temperatures. Thus, the cap layer of the tread may have desirable properties for driving in the spring and summer seasons. Then as the tread wears and the base layer is exposed, the tread may have desirable properties for driving in the fall and winter.

In the illustrated embodiment, the base layer **160** has a shaped geometry with a bottom portion that is wider than a top portion. Here, the base layer **160** includes a single base **170** that extends laterally across the crown of the tire **100**. Multiple radial projections **175** extend outwards from the single base **170**. In the illustrated embodiment, each rib **130** includes a single projection **175** of the base layer **160** that extends to the surface of the tread **115** when the tire **100** is new. In other words, a portion of the base layer is exposed when the tire is new, such that:

$$\frac{S_1}{S_2} > 0$$

where $S_1$ is the surface area of the first rubber composition of the base layer **160,** and $S_2$ is the surface area of the second rubber composition of the cap layer **165**. The base layer **160** has a shaped geometry such that $\frac{S_1}{S_2}$ increases as the tread **115** wears.

In one embodiment, the base layer **160** is constructed of a material having a first color and the cap layer **165** is constructed of a material having a second color different from the first color. For example, the cap layer **165** may be black and the base layer **160** may be white or a bright color. Thus, the base layer **165** may serve as a wear indicator. As the tread **115** becomes increasingly colored, it provides a signal to the user that the tire **100** is worn.

The base layer **165** may also have other properties that allow it to serve as a wear indicator. In one embodiment, the base layer **160** is constructed of a material having a first reflectivity when wet and the cap layer **165** is constructed of a material having a second reflectivity when wet that is different from the first reflectivity. Thus, as the tire tread **115** becomes more reflective (or less reflective), it provides a signal to the user that the tire **100** is worn.

It should be understood that the multi-layered tread **115** described herein is not limited to any particular type of tire, or even to pneumatic tires. While a passenger tire **100** is illustrated in **Figures 1** and **2**, in other embodiments, the tire may be a truck tire, a high performance tire, or an off the road tire. In another alternative embodiment, the tire may be a run-flat tire or a non-pneumatic tire.

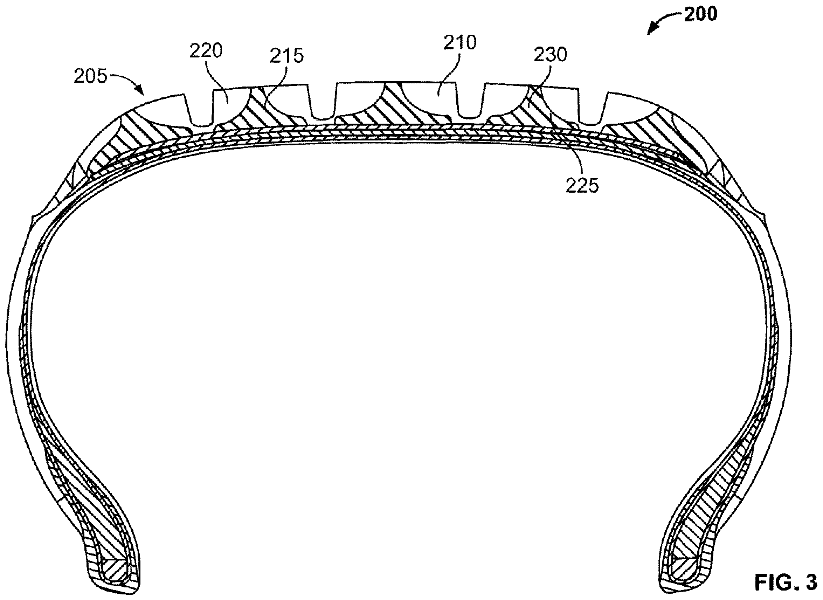

**Figure 3** is a partial cross-section of an alternative embodiment of a tire **200** having a multi-layered tread **205.** The tire **200** is substantially the same as the tire **100** of **Figures 1** and **2** and described above (including the alternative embodiments described), except for the differences discussed herein.

The tread **205** includes a plurality of ribs **210,** with each rib including a base layer **215** and a cap layer **220.** The base layer **215** and cap layer **220** are substantially the same as the base layer **160** and cap layer **165** discussed above.

In this embodiment, the tread **205** includes multiple base layers **215** that are axially spaced from each other. More specifically, each rib includes a base layer **215** having a discrete base **225** with a radial projection **230** extending therefrom. The projections **230** extend to a surface of the tread **205** when the tire **200** is new.

In an alternative embodiment (not shown), the base layer may have two or more projections disposed in each rib. In yet another alternative embodiment, at least one rib does not contain a base layer. In still another alternative embodiment (not shown), the base layer does not extend to the surface of the tread when the tire is new.

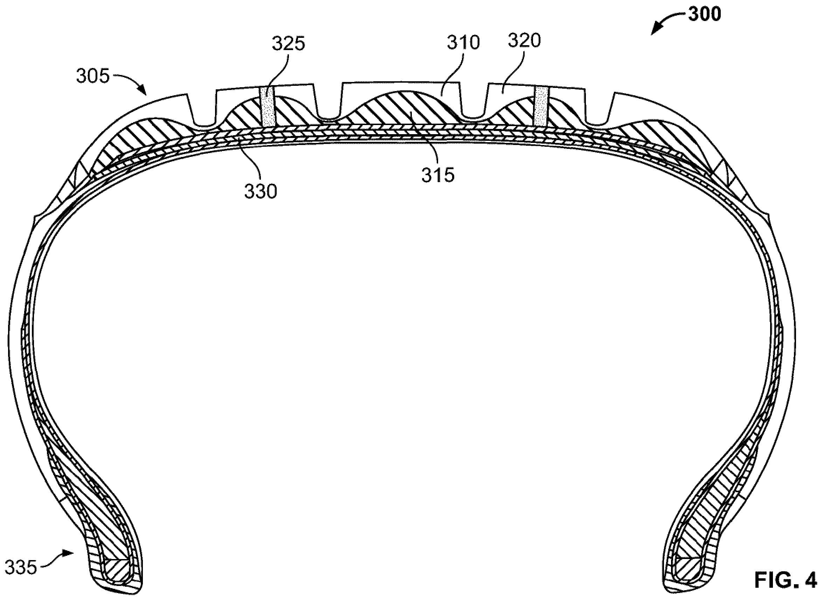

**Figure 4** is a partial cross-section of an alternative form of a tire **300** having a multi-layered tread **305** which is not according to the present invention but is useful for understanding the present invention. The tire **300** is substantially the same as the tire **100** of **Figures 1** and **2** and the tire **200** of **Figure 3** (including the alternative embodiments described), except for the differences discussed herein.

The tread **305** includes a plurality of ribs **310,** with each rib including a base layer **315** and a cap layer **320.** The base layer **315** and cap layer **320** are substantially the same as the base layer **160** and cap layer **165** (and the base layer **215** and cap layer **220**) discussed above.

In this form, the base layer **315** is a single base layer extending across the entire width of the tread **305.** The base layer **315** has a wave shape, with rounded peaks and valleys. The base layer **315** does not extend to the surface of the tread **305** when the tire is new. In an alternative form (not shown), the base layer may extend to the surface of the tread at some locations. In an alternative form (not shown), the base layer may be constructed of multiple discrete base layers that are axially spaced apart.

The tread further includes a pair of antennae **325** that are axially spaced from each other. The antennae **325** are constructed of a third material having an electrical resistivity lower than an electrical resistivity of the base layer **315** and lower than an electrical resistivity of the cap layer **320.** Exemplary materials for the antennae include, without limitation, natural rubber, synthetic rubber, conductive carbon black, plasticizers, and oil. Alternatively, other materials may be employed. For example, any material having an electrical resistivity less than $1 \times 10^9$ ohm-cm may be used as an antenna.

In one form, the antennae **325** have a complex dynamic modulus that is lower than that of the cap layer **320** and the base layer **315.** Alternatively, the antennae may have a complex dynamic modulus that is higher than that of the cap layer, but lower than that of the base layer. In another alternative form, the antennae have a complex dynamic modulus that is higher than that of the cap layer and the base layer.

In one form, the antennae **325** have glass transition temperature that is lower than that of the cap layer **320** and the base layer **315.** Alternatively, the antennae may have a glass transition temperature that is lower than that of the cap layer, but higher than that of the base layer. In another alternative form, the antennae have a glass transition temperature that is higher than that of the cap layer and the base layer.

In the illustrated form, the antennae **325** extend to the belts **330.** The belts **330** also have a low electrical resistivity. At least a portion of tire material extending from the belts **330** to a bead region **335** also has a low electrical resistivity. Thus, the antennae **325** form a portion of an electrical pathway from the bead region **335** to a surface of the tread **305.** The electrical pathway allows static electricity to be discharged to the ground, rather than build up in the tire **300.**

Each antenna **325** has a rectangular cross-section. However, other geometric shapes may be employed. In an alternative form (not shown), three or more antennas may be employed. In another alternative form (not shown), only a single antenna is employed.

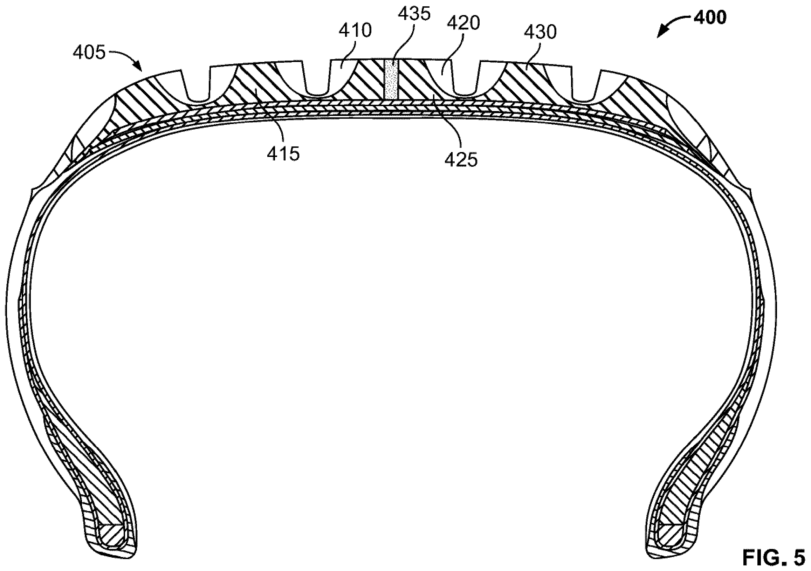

**Figure 5** is a partial cross-section of another alternative embodiment of a tire **400** having a multi-layered tread **405.** The tire **400** is substantially the same as the tire **100** of **Figures 1** and **2,** the tire **200** of **Figure 3,** and the tire **300** of **Figure 4** (including the alternative embodiments described), except for the differences discussed herein.

The tread **405** includes a plurality of ribs **410,** with each rib including a base layer **415** and a cap layer **420.** The base layer **415** and cap layer **320** are substantially the same as the base layer **160** and cap layer **165** (and the base layers **215, 315** and cap layers **220, 320**) discussed above.

In this embodiment, the base layer **415** includes a single base **425** that extends across the entire width of the tread **405.** Multiple radial projections **430** extend outwards from the single base **425.** In the illustrated embodiment, each rib **410** includes a single projection **430** of the base layer **415** that extends to the surface of the tread **405** when the tire **400** is new. In an alternative embodiment (not shown), the base layer does not extend to the surface of the tread in at least some of the ribs. In another alternative embodiment (not shown), the base layer may be constructed of multiple discrete base layers that are axially spaced apart.

The tread further includes an antenna **435** that is substantially the same as each of the antennae **325** of the tire **300** discussed above, including the alternative embodiments. The antenna **435** forms a conductive pathway in the same manner described above. While the tire **400** is depicted as having a single antenna, in alternative embodiments, multiple antennae may be employed.

To the extent that the term "includes" or "including" is used in the specification or the claims, it is intended to be inclusive in a manner similar to the term "comprising" as that term is interpreted when employed as a transitional word in a claim. Furthermore, to the extent that the term "or" is employed (e.g., A or B) it is intended to mean "A or B or both." When the applicants intend to indicate "only A or B but not both" then the term "only A or B but not both" will be employed. Thus, use of the term "or" herein is the inclusive, and not the exclusive use. See, Bryan A. Garner, A Dictionary of Modern Legal Usage 624 (2d. Ed. 1995). Also, to the extent that the terms "in" or "into" are used in the specification or the claims, it is intended to additionally mean "on" or "onto." Furthermore, to the extent the term "connect" is used in the specification or claims, it is intended to mean not only "directly connected to," but also "indirectly connected to" such as connected through another component or components.

While the present invention has been illustrated by the description of embodiments thereof, and while the embodiments have been described in considerable detail, it is not the intention of the applicants to restrict or in any way limit the scope of the appended claims to such detail. Additional advantages and modifications will readily appear to those skilled in the art. Therefore, the invention, in its broader aspects, is not limited to the specific details, the representative system and method, and illustrative examples shown and described. Accordingly, departures may be made from such details without departing from the scope of the applicant's general inventive concept, as defined in the appended claims.

**Claims**

1. A tire (100; 200; 400) comprising:
   a tread (115; 205; 405) having at least four circumferential grooves (120) that define at least five circumferential ribs (125; 210; 410), the tread (115; 205; 305; 405) including a base layer (160; 215; 415) and a cap layer (165; 220; 320; 420) disposed above the base layer (160; 215; 415),

   wherein the base layer (160; 215; 415) is constructed of a first rubber composition having a first complex dynamic modulus and a first glass transition temperature,
   wherein the cap layer (165; 220; 420) is constructed of a second rubber composition having a second complex dynamic modulus greater than the first complex dynamic modulus and a second glass transition temperature greater than the first glass transition temperature,
   wherein the base layer (160; 215; 415) has a shaped geometry with a bottom portion that is wider than a top portion,
   **characterized in that** each of the at least five ribs (125; 210; 410) includes a single radial projection (175; 230; 430) of the base layer (160; 215; 415) that extends to a surface of the tread (115; 205; 405) when the tire (100; 200; 400) is new, such that:

   $$\frac{S_1}{S_2} > 0$$

   where $S_1$ is a surface area of the first rubber composition, and
   $S_2$ is a surface area of the second rubber composition, and
   wherein, $\frac{S_1}{S_2}$ increases as the tread (115; 205; 305; 405) wears.

2. The tire (100; 200; 400) of claim 1, further comprising a pair of bead portions (105a, 105b) and a pair of sidewall portions (110a, 110b) extending between the pair of bead portions (105a, 105b) and the tread (115; 205; 405).

3. The tire (100; 200; 400) of claim 1, wherein the first rubber composition has a first color and the second rubber composition has a second color different from the first color.

**4.** The tire (100; 200; 400) of claim 1, wherein the first rubber composition has a first reflectivity when wet and the second rubber composition has a second reflectivity when wet that is different from the first reflectivity.

**5.** The tire (100; 200; 400) of claim 1, wherein the first rubber composition includes at least one of natural rubber, synthetic rubber, carbon black, plasticizers, and oil.

**6.** The tire (100; 200; 400) of claim 1, wherein the second rubber composition includes at least one of natural rubber, synthetic rubber, carbon black, silica, and silane.

**7.** The tire (400) of claim 1, further comprising an antenna (435) constructed of a rubber material having a third complex dynamic modulus greater than the first complex dynamic modulus, wherein the antenna ( 435) is positioned within the tread (405) and is configured to contact the road when the tire ( 400) is new.

**8.** A method of making a tire (100; 200; 400), the method comprising
forming a circumferential tread (115; 205; 405) including at least five circumferential ribs (125; 210; 410) separated by at least four circumferential grooves (120), with each of the at least five ribs (125; 210; 410) having a base layer (160; 215; 415) and a cap layer (165; 220; 420) disposed above the base layer (160; 215; 415), including:

forming the base layer (160; 215; 415) from a first material having a first complex dynamic modulus and a first glass transition temperature, forming the cap layer (165; 220; 420) from a second material having a second complex dynamic modulus greater than the first complex dynamic modulus, and a second glass transition temperature higher than the first glass transition temperature, and
shaping the base layer (160; 215; 415) in each rib (125; 210; 410) such that a bottom portion is wider than a top portion, and
**characterized by** forming a single radial projection (175; 230; 430) of the base layer (160; 215; 415) in each of the at least five ribs (125; 210; 310; 410) that extends to a surface of the tread (115; 205; 405), such that an exposed surface area of the first material increases as the circumferential tread (115; 205; 405) wears.

**9.** The method of claim 8, further comprising:

providing a first bead portion (105a);
extending a first sidewall (110a) from the first bead portion (105a) to the circumferential tread (115; 205; 405);
providing a second bead portion (105b); and
extending a second sidewall (110b) from the second bead portion (105b) to the circumferential tread (115; 205; 405).

**10.** The method of claim 8, further comprising applying the cap layer (165; 220; 420) to the base layer (160; 215; 415), such that a portion of the base layer (160; 215; 415) is exposed.

**11.** The method of claim 8, further comprising:

constructing at least one antenna ( 435) from a rubber material having an electrical resistivity lower than an electrical resistivity of the first material and lower than an electrical resistivity of the second material; and
positioning the antenna (435) within the tread ( 405) such that it is configured to contact the road when the tire (400) is new.

**12.** The method of claim 11, further comprising forming the antenna ( 435) with a rectangular cross-section.

**13.** The method of claim 8, wherein step of forming the base layer (160; 215; 415) includes forming a plurality of base layers (160; 215; 415) axially spaced from each other.

**14.** The method of claim 8, wherein the step of forming the base layer (160; 215; 415) includes forming a single base (160; 215; 415) and a plurality of radial projections.

**Patentansprüche**

**1.** Reifen (100; 200; 400), umfassend:

eine Lauffläche (115; 205; 405) mit mindestens vier Umfangsrillen (120), die mindestens fünf Umfangsrippen (125; 210; 410) definieren, wobei die Lauffläche (115; 205; 305; 405) eine Basisschicht (160; 215; 415) und eine Deckschicht (165; 220; 320; 420) aufweist, die über der Basisschicht (160; 215; 415) angeordnet ist,
wobei die Basisschicht (160; 215; 415) aus einer ersten Kautschukzusammensetzung mit einem ersten komplexen dynamischen Modul und einer ersten Glasübergangstemperatur aufgebaut ist,
wobei die Deckschicht (165; 220; 420) aus einer zweiten Kautschukzusammensetzung mit einem zweiten komplexen dynamischen Modul, der größer als der erste komplexe dynamische Modul ist, und einer zweiten Glasübergangstemperatur, die größer als die erste Glasübergangstemperatur ist, aufgebaut ist,
wobei die Basisschicht (160; 215; 415) eine geformte Geometrie mit einem unteren Abschnitt aufweist, der breiter als ein oberer Abschnitt ist, **dadurch gekennzeichnet, dass** jede der mindestens fünf Rippen (125; 210; 410) eine einzelne radiale Ausbuchtung (175; 230; 430) der Basisschicht (160; 215; 415) einschließt, der sich zu einer Oberfläche der Lauffläche (115; 205;405) erstreckt, wenn der Reifen (100; 200; 400) neu ist, so dass:

$$\frac{S_1}{S_2} > 0$$

wobei $S_1$ eine Oberfläche der ersten Kautschukzusammensetzung ist, und $S_2$ eine Oberfläche der zweiten Kautschukzusammensetzung ist, und

wobei $\frac{S_1}{S_2}$ sich mit fortschreitender Abnutzung der Lauffläche (115; 205; 305; 405) erhöht.

2. Reifen (100; 200; 400) nach Anspruch 1, ferner umfassend ein Paar Wulstabschnitte (105a, 105b) und ein Paar Seitenwandabschnitte (110a, 110b), die sich zwischen dem Paar Wulstabschnitte (105a, 105b) und der Lauffläche (115; 205; 405) erstrecken.

3. Reifen (100; 200; 400) nach Anspruch 1, wobei die erste Kautschukzusammensetzung eine erste Farbe aufweist und die zweite Kautschukzusammensetzung eine zweite Farbe aufweist, die sich von der ersten Farbe unterscheidet.

4. Reifen (100; 200; 400) nach Anspruch 1, wobei die erste Kautschukzusammensetzung im nassen Zustand ein erstes Reflexionsvermögen aufweist, und die zweite Kautschukzusammensetzung im nassen Zustand ein zweites Reflexionsvermögen aufweist, das sich von dem ersten Reflexionsvermögen unterscheidet.

5. Reifen (100; 200; 400) nach Anspruch 1, wobei die erste Kautschukzusammensetzung mindestens eines von Naturkautschuk, Synthesekautschuk, Ruß, Weichmacher und Öl einschließt.

6. Reifen (100; 200; 400) nach Anspruch 1, wobei die zweite Kautschukzusammensetzung mindestens eines von Naturkautschuk, Synthesekautschuk, Ruß, Siliciumdioxid und Silan einschließt.

7. Reifen (400) nach Anspruch 1, ferner umfassend eine Antenne (435), die aus einem Kautschukmaterial hergestellt ist, das einen dritten komplexen dynamischen Modul aufweist, der größer als der erste komplexe dynamische Modul ist, wobei die Antenne (435) innerhalb der Lauffläche (405) positioniert ist und konfiguriert ist, um die Straße zu berühren, wenn der Reifen (400) neu ist.

8. Verfahren zum Herstellen eines Reifens (100; 200; 400), das Verfahren umfassend

Bilden einer Umfangslauffläche (115; 205; 405), die mindestens fünf Umfangsrippen (125; 210; 410) einschließt, die durch mindestens vier Umfangsrillen (120) getrennt sind, wobei jede der mindestens fünf Rippen (125; 210; 410) eine Basisschicht (160; 215; 415) und eine Deckschicht (165; 220; 420) aufweist, die über der Basisschicht (160; 215; 415) angeordnet ist, einschließlich:
Ausbilden der Basisschicht (160; 215; 415) aus einem ersten Material mit einem ersten komplexen dynamischen Modul und einer ersten Glasübergangstemperatur,
Ausbilden der Deckschicht (165; 220; 420) aus einem zweiten Material mit einem zweiten komplexen dynamischen Modul, der größer als der erste komplexe dynamische Modul ist, und einer zweiten Glasübergangstemperatur, die höher als die erste Glasübergangstemperatur ist, und Formen der Basisschicht (160; 215; 415) in jeder Rippe (125; 210; 410) derart, dass ein Bodenabschnitt breiter als ein oberer Abschnitt ist, und **gekennzeichnet durch** Ausbilden einer einzelnen radialen Ausbuchtung (175; 230; 430) der Basisschicht (160; 215; 415) in jeder der mindestens fünf Rippen (125; 210; 310; 410), die sich zu einer Oberfläche der Lauffläche (115; 205; 405) erstreckt, sodass eine freiliegende Oberfläche des ersten Materials mit fortschreitender Abnutzung der Umfangslauffläche (115; 205; 405) zunimmt.

9. Verfahren nach Anspruch 8, ferner umfassend:

Bereitstellen eines ersten Wulstabschnitts (105a);
Verlängern einer ersten Seitenwand (110a) von dem ersten Wulstabschnitt (105a) zu der Umfangslauffläche (115; 205; 405);
Bereitstellen eines zweiten Wulstabschnitts (105b); und
Erweitern einer zweiten Seitenwand (110b) von dem zweiten Wulstabschnitt (105b) zu der Umfangslauffläche (115; 205; 405).

10. Verfahren nach Anspruch 8, ferner umfassend das Aufbringen der Deckschicht (165; 220; 420) auf die Basisschicht (160; 215; 415), sodass ein Abschnitt der Basisschicht (160; 215; 415) freiliegt.

**11.** Verfahren nach Anspruch 8, ferner umfassend:

Konstruieren mindestens einer Antenne (435) aus einem Kautschukmaterial mit einem elektrischen Widerstand, der niedriger als ein elektrischer Widerstand des ersten Materials und niedriger als ein elektrischer Widerstand des zweiten Materials ist; und
Positionieren der Antenne (435) innerhalb der Lauffläche (405) derart, dass sie konfiguriert ist, um die Straße zu berühren, wenn der Reifen (400) neu ist.

**12.** Verfahren nach Anspruch 11, ferner umfassend das Bilden der Antenne (435) mit einem rechteckigen Querschnitt.

**13.** Verfahren nach Anspruch 8, wobei der Schritt des Bildens der Basisschicht (160; 215; 415) das Bilden einer Vielzahl von Basisschichten (160; 215; 415), die axial voneinander beabstandet sind, einschließt.

**14.** Verfahren nach Anspruch 8, wobei der Schritt des Bildens der Basisschicht (160; 215; 415) das Bilden einer einzelnen Basis (160; 215; 415) und einer Vielzahl von radialen Ausbuchtungen einschließt.

**Revendications**

**1.** Pneu (100 ; 200 ; 400) comprenant :

une bande de roulement (115 ; 205 ; 405) possédant au moins quatre rainures circonférentielles (120) qui définissent au moins cinq nervures circonférentielles (125 ; 210 ; 410), la bande de roulement (115 ; 205 ; 305 ; 405) incluant une couche de base (160 ; 215 ; 415) et une couche de revêtement (165 ; 220 ; 320 ; 420) disposée au-dessus de la couche de base (160 ; 215 ; 415).
dans lequel la couche de base (160 ; 215 ; 415) est construite en une première composition de caoutchouc possédant un premier module dynamique complexe et une première température de transition vitreuse,
dans lequel la couche de revêtement (165 ; 220 ; 420) est construite à partir d'une seconde composition de caoutchouc possédant un deuxième module dynamique complexe supérieur au premier module dynamique complexe et une seconde température de transition vitreuse supérieure à la première température de transition vitreuse,
dans lequel la couche de base (160 ; 215 ; 415) possède une géométrie profilée avec une partie de fond qui est plus large qu'une partie haute, **caractérisé en ce que** chacune des au moins cinq

nervures (125 ; 210 ; 410) inclut une seule saillie radiale (175 ; 230 ; 430) de la couche de base (160 ; 215 ; 415) qui s'étend jusqu'à une surface de la bande de roulement (115 ; 205 ; 405) lorsque le pneu (100 ; 200 ; 400) est neuf, de telle sorte que :

$$\frac{S1}{S2} > 0$$

où $S_1$ est une zone de surface de la première composition de caoutchouc, et
$S_2$ est une zone de surface de la seconde composition de caoutchouc, et
dans lequel, $\frac{S1}{S2}$ augmente à mesure que la bande de roulement (115 ; 205 ; 305 ; 405) s'use.

**2.** Pneu (100 ; 200 ; 400) selon la revendication 1, comprenant en outre une paire de parties de talon (105a, 105b) et une paire de parties de flac (110a, 110b) s'étendant entre la paire de parties de talon (105a, 105b) et la bande de roulement (115 ; 205 ; 405).

**3.** Pneu (100 ; 200 ; 400) selon la revendication 1, dans lequel la première composition de caoutchouc possédé une première couleur et la seconde composition de caoutchouc possédé une seconde couleur différente de la première couleur.

**4.** Pneu (100 ; 200 ; 400) selon la revendication 1, dans lequel la première composition de caoutchouc possédé une première réflectivité lorsqu'elle est mouillée et la seconde composition de caoutchouc a une seconde réflectivité lorsqu'elle est mouillée qui est différente de la première réflectivité.

**5.** Pneu (100 ; 200 ; 400) selon la revendication 1, dans lequel la première composition de caoutchouc inclut au moins l'un de caoutchouc naturel, de caoutchouc synthétique, de noir de carbone, de plastifiants, et d'huile.

**6.** Pneu (100 ; 200 ; 400) selon la revendication 1, dans lequel la seconde composition de caoutchouc inclut au moins l'un de caoutchouc naturel, de caoutchouc synthétique, de noir de carbone, de silice, et de silane.

**7.** Pneu (400) selon la revendication 1, comprenant en outre une antenne (435) construite en un matériau en caoutchouc possédant un troisième module dynamique complexe supérieur au premier module dynamique complexe, dans lequel l'antenne (435) est positionnée au sein de la bande de roulement (405) et est configurée pour venir en contact avec la route lorsque le pneu (400) est neuf.

8. Procédé de fabrication d'un pneu (100 ; 200 ; 400), le procédé comprenant la formation d'une bande de roulement circonférentielle (115 ; 205 ; 405) incluant au moins cinq nervures circonférentielles (125 ; 210 ; 410) séparées par au moins quatre rainures circonférentielles (120), avec chacune des au moins cinq nervures (125 ; 210 ; 410) possédant une couche de base (160 ; 215 ; 415) et une couche de revêtement (165 ; 220 ; 420) disposée au-dessus de la couche de base (160 ; 215 ; 415), incluant :

la formation de la couche de base (160 ; 215 ; 415) à partir d'un premier matériau possédant un premier module dynamique complexe et une première température de transition vitreuse, la formation de la couche de revêtement (165 ; 220 ; 420) à partir d'un second matériau possédant un deuxième module dynamique complexe supérieur au premier module dynamique complexe, et une seconde température de transition vitreuse plus élevée que la première température de transition vitreuse, et le profilage de la couche de base (160 ; 215 ; 415) dans chaque nervure (125 ; 210 ; 410) de telle sorte qu'une partie de fond est plus large qu'une partie haute, et **caractérisé par** la formation d'une seule saillie radiale (175 ; 230 ; 430) de la couche de base (160 ; 215 ; 415) dans chacune des au moins cinq nervures (125 ; 210 ; 310 ; 410) qui s'étend jusqu'à une surface de la bande de roulement (115 ; 205 ; 405), de telle sorte qu'une zone de surface exposée du premier matériau augmente à mesure que la bande de roulement circonférentielle (115 ; 205 ; 405) s'use.

9. Procédé selon la revendication 8, comprenant en outre :

la fourniture d'une première partie de talon (105a) ; l'extension d'un premier flanc (110a) à partir de la première partie de talon (105a) jusqu'à la bande de roulement circonférentielle (115 ; 205 ; 405) ; la fourniture d'une seconde partie de talon (105b) ; et l'extension d'un second flanc (110b) à partir de la seconde partie de talon (105b) jusqu'à la bande de roulement circonférentielle (115 ; 205 ; 405).

10. Procédé selon la revendication 8, comprenant en outre l'application de la couche de revêtement (165 ; 220 ; 420) à la couche de base (160 ; 215 ; 415), de telle sorte qu'une partie de la couche de base (160 ; 215 ; 415) est exposée.

11. Procédé selon la revendication 8, comprenant en outre :

la construction d'au moins une antenne (435) à partir d'un matériau en caoutchouc possédant une résistivité électrique inférieure à une résistivité électrique du premier matériau et inférieure à une résistivité électrique du second matériau ; et le positionnement de l'antenne (435) au sein de la bande de roulement (405) de telle sorte qu'elle est configurée pour venir en contact avec la route lorsque le pneu (400) est neuf.

12. Procédé selon la revendication 11, comprenant en outre la formation de l'antenne (435) avec une section transversale rectangulaire.

13. Procédé selon la revendication 8, dans lequel l'étape de formation de la couche de base (160 ; 215 ; 415) inclut la formation d'une pluralité de couches de base (160 ; 215 ; 415) axialement espacées les unes des autres.

14. Procédé selon la revendication 8, dans lequel l'étape de formation de la couche de base (160 ; 215 ; 415) inclut la formation d'une seule base (160 ; 215 ; 415) et d'une pluralité de saillies radiales.

EP 3 536 523 B1

FIG. 1

10

FIG. 2

FIG. 3

EP 3 536 523 B1

FIG. 4

EP 3 536 523 B1

FIG. 5

EP 3 536 523 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002052906 A
- US 2015083293 A1

- EP 1512554 A1

**Non-patent literature cited in the description**

- **BRYAN A. GARNER.** A Dictionary of Modern Legal Usage. 1995, vol. 624